# EUROPÄISCHE PATENTSCHRIFT

(11) **EP 3 249 135 B1**
(45) Veröffentlichungstag und Bekanntmachung des Hinweises auf die Patenterteilung: **04.09.2019**
(21) Anmeldenummer: 17172118.6
(22) Anmeldetag: 22.05.2017
(51) Int. Cl.: E04F 13/08, B32B 13/04, E04F 13/14, E04B 1/76, E04C 2/288, E04B 1/80

(54) **ISOLIERENDES WANDELEMENT**
INSULATING WALL ELEMENT
ÉLÉMENT DE MUR ISOLANT

(30) Priorität: 23.05.2016 BE 201605375
(43) Veröffentlichungstag der Anmeldung: 29.11.2017
(73) Patentinhaber: NMC S.A., 4731 Eynatten (BE)
(72) Erfinder: Mayeres, Jean-Pierre, 4700 Eupen (BE); Genten, Ernst, 4770 Schoppen (BE)
(74) Vertreter: dompatent von Kreisler Selting Werner - Partnerschaft von Patent- und Rechtsanwälten mbB

(56) Entgegenhaltungen:
- EP-A2- 0 689 916
- US-A1- 2005 258 572
- US-A1- 2006 156 668
- US-A1- 2008 104 913

## Beschreibung

Die vorliegende Erfindung betrifft ein isolierendes Wandelement zum Verkleiden von Oberflächen und insbesondere von Fassaden, das als Verbundplatte eine Wärmedämmstoffschicht und eine Leichtbetonschicht umfasst. Ein isolierendes Wandelement dieser Art ist aus US 2008/0104913 A1 bekannt.

Die Erfindung umfasst ferner ein Wandsystem unter Verwendung der isolierenden Wandelemente und ein Verfahren zur Erstellung einer isolierenden Plattenfassade unter Verwendung der erfindungsgemäßen Wandelemente.

Isolierende Platten zum Verkleiden von Oberflächen und insbesondere von Fassaden sind zahlreich aus dem Stand der Technik bekannt. Es handelt sich hierbei gewöhnlich um rechteckige Platten aus Dämmstoffen wie Polystyrol, die nach Aufbringen auf der Fassade auf der Sichtseite versiegelt werden. Diese Versiegelung, die üblicherweise mit einem Fassadenputz durchgeführt wird bedeutet einen zusätzlichen Arbeitsschritt, für den auch gute Wetterbedingungen vorherrschen müssen. Nach Auftragen der Versiegelung muss eine weitere Zeit bis zum Trocknen oder Abbinden abgewartet werden, bevor die Fassade weiter behandelt werden kann, beispielsweise durch Auftragen einer Schutz- oder Farbschicht.

Die Putzversiegelungen haben in der Praxis eine Dicke zwischen 4 und 6 mm. Diese geringe Dicke in Verbindung mit den Dämmstoffplatten führt häufig zu einem Algen- oder Pilzbewuchs auf den Fassaden.

Ausschlaggebend ist hierbei die hohe Feuchtigkeit, die als Kondenswasser an der Fassadenoberfläche aufstaut. Pilzbewuchs erfolgt bereits ab einer relativen Luftfeuchte von 75-80 % und ab 85% ist ein Pilzbewuchs die Regel. Das heißt, wenn ein Algenbefall vorliegt, ist auch mit einer höheren Pilzkonzentration zu rechnen.

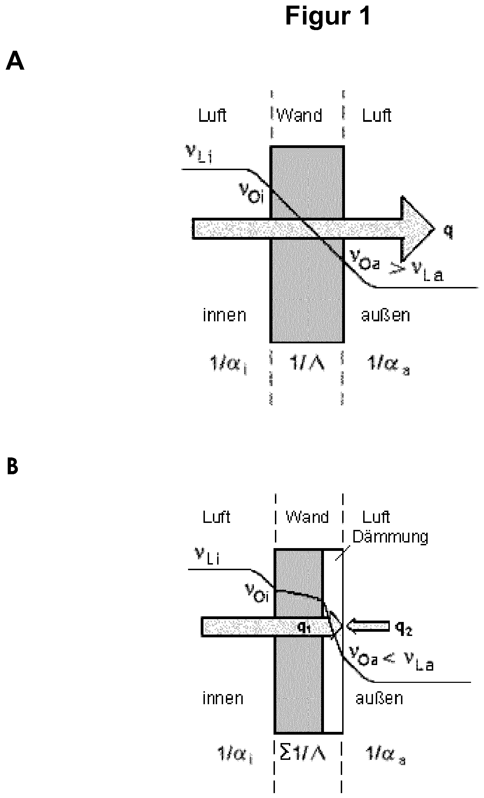

Bei einem Wärmeverbundsystem mit frontseitigem dünnem Putz kommt es zu abstrahlungsbedingten Unterkühlungen und somit zu dem damit verbundenen Tauwasserausfall (Abb. 1B). Ebenso ist die Zeitdauer der Abtrocknung, auch des Niederschlagswassers, länger. Daneben kann sich auch noch eine starke Niederschlagsbelastung auswirken. Im Vergleich dazu ist bei einer massiven ungedämmten Wandkonstruktion der Wärmestrom von innen nach außen gerichtet. Damit liegt die Oberflächentemperatur immer oberhalb der angrenzenden Lufttemperatur und es tritt keine Kondensation auf (Abb. 1A).

Dieser Algenbewuchs stellt ein schwerwiegendes Bauproblem und ist mit der zunehmenden Verwendung von stark dämmenden Fassadenplatten immer gravierender geworden. Untersuchungen in der Städten Parchim, Sternberg, Wittenberge und Perleberg ergaben, dass 12,5% der Gesamtfläche der begutachteten Fassaden mit Wärmedämmverbundsystemen befallen war.

Weiterhin weist die dünne Putzschicht nur unzureichende mechanische Stabilität auf und kann leicht beschädigt werden. Beispielsweise gibt es eine Reihe von Vögeln, die Putzschichten durchpicken, wie beispielsweis Spechte, die ein Vorliebe für Rauhputz haben und dann Eintrittslöcher, die sogenannten "Spechtlöcher" in den Putz picken.

Aufgabe der Erfindung ist es daher, eine gattungsgemäße Fassadenplatte dahingehend zu verbessern, dass sie bezüglich mindestens einer der oben genannten Nachteile verbessert wird.

### Zusammenfassung der Erfindung

Diese Aufgabe wird gemäß der Erfindung dadurch gelöst, dass ein isolierendes Wandelement zum Verkleiden von Oberflächen, insbesondere zum Verkleiden von Fassaden bereit gestellt wird, das aus einer ersten Schicht aus einem Wärmedämmstoff, deren Oberfläche mit einer weiteren Schicht aus Leichtbeton verbunden ist, besteht, wobei die Leichtbetonschicht eine Dicke zwischen 10 und 40 mm aufweist und der Leichtbeton eine Rohdichte von zwischen 600 und 2000 kg/m3 aufweist, und die Wärmedämmstoffschicht an der Berührungsfläche zur Leichtbetonschicht eine randseitig umlaufende Nut aufweist, wobei die Leichtbetonschicht diese Nut nicht überragt.

Das erfindungsgemäße Wandelement vereinigt mehrere entscheidende Vorteile gegenüber den aus dem Stand der Technik bekannten Wandelementen.

Durch die Tatsache, dass das Wandelement bereits eine Leichtbetonschicht aufweist, ist eine wetter- und stoßfeste Außenschicht vorhanden, die bereits mit der Montage des Wandelements der Fassade einen sehr guten Schutz verleiht und einen massives und fomstabiles Bauelement darstellt. Damit kann das erfindungsgemäße Wandelement gerade auch im Sockelbereich von Fassaden vorteilhaft eingesetzt werden.

Das Auftragen einer aufwändigen Putzversiegelung ist zudem nicht mehr notwendig. Die Wandelemente können nach randseitigem Verspachteln mit Füllmasse direkt mit einem Endanstrich versehen werden.

Da Leichtbeton ein atmungsaktiver Werkstoff ist, der aus natürlichen Rohstoffen besteht, erfüllt er auch die Anforderungen an einen nachhaltigen und umweltfreundlichen Baustoff.

Die Leichtbetonschicht erhöht zudem die Dämmwirkung der Wärmedämmschicht, so dass eine nochmals verbesserte Wärmedämmung resultiert.

Wie die Erfinder festgestellt haben, führt die Leichtbetonschicht mit ihrer erfindungsgemäßen Dicke und ihren erfindungsgemäßen bauphysikalischen Eigenschaften zu einem von innen nach außen gerichteten Wärmestrom, der so bemessen ist, dass der Taupunkt an der Oberfläche nicht unterschritten wird. Damit wird die Kondensatbildung verhindert und die Fassade bleibt frei von Algen oder Pilzen.

Die Verbindung des herkömmlichen Dämmstoffplatten und der darauf angebrachten Versiegelung, die gewöhnlich durch Verputzen erreicht wird, stellt eine Schwachstelle dar. Da die Wärmedämmschicht und die Leichtbetonschicht zweckmäßigerweise durch Aufgießen des flüssigen Leichtbetons auf die Wärmedammplatte hergestellt werden, gehen sie eine dauerhafte und feste Verbindung miteinander ein.

Durch die ausgeprägte Leichtbetonschicht resultiert eine sehr gute Feuerbeständigkeit, die beachtlicherweise auch frei von Schwachstellen ist, da das Wandelement eine geschlossene und damit durchgehend feuerbeständige Leichtbetonaußenseite aufweist. Zudem weist das erfindungsgemäße Wandelement eine gute Schalldämmung auf.

Da die mineralische Deckschicht der Platten eine Leichtbetonschicht von begrenzter Dicke ist, weist das erfindungsgemäße Wandelement ein relativ geringes Gewicht auf, das einen manuellen Transport und eine manuelle Montage ermöglicht.

Mit traditionellen Fassadenplattensystemen muss sehr viel Arbeit und Aufwand in die Verstärkung von Ecken und Fensterrahmen investiert werden. Bei der Verwendung der erfindungsgemäßen Wandelemente entfällt dies, da die auf Gehrung gesägten Elemente eine geschlossene Leichtbetonaußenseite aufweisen.

Das isolierende Wandelement kann durch seine konkrete Gestaltung gezielt an die bauseitigen Erfordernisse angepasst werden. So kann das Element beliebige Maße annehmen und die beiden Schichten in ihrer Dicke variiert werden.

Das isolierende Wandelement kann zur Befestigung auf der Oberfläche auf alle bekannte Befestigungsmittel und Befestigungsarten zurückgreifen, wie Verkleben, Verdübeln, Befestigung durch eine Nut auf einem Haltesteg etc..

Das isolierende Wandelement kann aus einer Vielzahl von Isoliermaterialien hergestellt werden, um so den unterschiedlichen Anforderungen gerecht zu werden.

Das isolierende Wandelement kann gerade mit den bevorzugt eingesetzten Polystyrol- oder Polyurethanwerkstoffe in einfacher und kostengünstiger Weise hergestellt werden. Sie kann insgesamt fabrikmäßig unter kontrollierten Bedingungen und damit stets gleich guter Qualität hergestellt werden.

Durch den Einsatz von Pigmenten oder wasserfesten Beschichtungen kann das Wandelement in optischer und versiegelungstechnischer Sicht gezielt an die jeweilige Fassade angepasst werden.

### Ausführliche Beschreibung der Erfindung

Das isolierende Wandelement ist zweckmäßigerweise als plane Platte ausgestaltet, d.h. es weist eine einheitliche Dicke auf, bei der die vordere Fläche und die rückseitige Fläche planparallel sind. Es entspricht hiermit der üblichen Ausgestaltung einer Fassadenplatte und führt bei einer gleichmäßigen Dämmwirkung zu einer einheitlichen Oberfläche. Diese planparellele Ausbildung muss nicht ausschließen, dass die Oberflächen auch strukturiert vorliegen können, z.B. mit Rillen oder anderen Vertiefungen, um beispielsweise die Haftung auf dem Untergrund zu verbessern, oder eine ästhetische ansprechende Oberfläche zu erzeugen.

Hierbei ist bevorzugt, dass das Wandelement als Verbundplatte aus einer als planen Platte ausgeformten Wärmedämmstoffschicht und einer als planen Platte ausgebildeten Leichtbetonschicht besteht.

Erfindungsgemäß weist die Leichtbetonschicht eine Dicke von zwischen 10 mm und 40 mm, bevorzugt von zwischen 12 und 30 mm besonders bevorzugt von zwischen 15 und 20 mm und insbesondere von 15 mm auf. Es hat sich herausgestellt, dass eine Schichtdicke in diesem Bereich sowohl eine ausreichende Festigkeit aufweist, als auch ausreichend die Kondensatbildung hemmt, aber auch noch zu einem handhabbaren Wandelement führt.

Im Rahmen der notwendigen mechanischen Stabilität sollte der hierbei verwendete Leichtbeton eine Zylinderdruckfestigkeit gemäß DIN 1045-1:2001-07 von mindestens 20 MPa, bevorzugt von mindestens 25 MPa, besonders bevorzugt von mindesten 30 MPa und insbesondere von mindestens 35 MPa aufweisen.

Der Leichtbeton weist zweckmäßigerweise eine Rohdichte von zwischen 600 kg/m³ und 2000 kg/m³, besonders bevorzugt von zwischen 1000 kg/m³ und 1800 kg/m³, und insbesondere bevorzugt von zwischen 1200 kg/m³ und 1600 kg/m³ auf.

Erfindungsgemäß hat der Leichtbeton einen Wasserabsorptionskoeffizient ermittelt nach DIN 52617:1987-05 von kleiner gleich 8%, bevorzugt von kleiner gleich 7%, besonders bevorzugt von kleiner gleich 6 % und insbesondere bevorzugt von zwischen 4 und 6%.

Die Grundplatte ist zweckmäßigerweise auf der Rückseite als plane Platte gestaltet, die bevorzugt parallelflächig zur Vorderseite der Grundplatte ist. Damit lässt sich die isolierende Platte flächenbündig auf den meist als plane Fläche vorliegenden (Fassaden-) Oberflächen befestigen. Die Rückseite kann hierbei mit Vertiefungen in Form von Rillen, Nuten oder Mulden aufweisen, die durch Oberflächenvergrößerung und Aufnahme eines Klebemittels die Montage an die Oberfläche erleichtern.

In einer Ausführungsform der Erfindung weist der Leichtbeton eine Wärmeleitfähigkeit nach DIN 4108-4:2016-07 von zwischen 0,39 und 1,6 W m⁻¹k⁻¹, bevorzugt von zwischen 0,4 und 1,4 W m⁻¹k⁻¹, und besonders bevorzugt von zwischen 0,4 und 1,0 W m⁻¹k⁻¹ auf.

In einer weiteren Ausführungsform der Erfindung weist der Leichtbeton ein Elastizitätsmodul E von zwischen 10 und 50 GPa, bevorzugt von zwischen 15 und 40 GPa, und besonders bevorzugt von zwischen 20 und 30 GPa auf.

Erfindungsgemäß sind alle bekannten Leichtbetonwerkstoffe einsetzbar. Als nicht einschränkende Beispiele sind hier genannt: Gefügedichter Leichtbeton, Haufwerksporiger Leichtbeton, Schaumbeton und Porenbeton. Besonders bevorzugt ist hier die Verwendung von Haufwerksporigem Leichtbeton.

In einer weiteren Ausführungsform der Erfindung weist der Leichtbeton Armierungen auf, die bevorzugt ausgewählt sind aus der Gruppe enthaltend Glasfaser, Polymerfaser, Metallnetz und Metallgitter. Dadurch kann die Festigkeit des Leichtbetons, insbesondere bei geringen Schichtdicken, noch weiter erhöht werden.

In einer Ausführungsform der Erfindung weist der Wärmedämmstoff eine Druckfestigkeit von mindestens 250 kPa, bevorzugt von mindestens 300 kPa, und besonders bevorzugt von mindestens 400 kPa auf.

Bei dem erfindungsgemäßen Wandelement kann der Fachmann auf eine breite Palette an möglichen Wärmedämmstoffen zurückgreifen, die er entsprechend den baulichen Anforderungen auswählen wird.

In einer bevorzugten Ausführungsform ist der Wärmedämmstoff ausgewählt aus der Gruppe enthaltend expandiertes Polystyrol-Hartschaum (EPS), extrudierter Polystyrol-Hartschaum (XPS), Polyurethan-Hartschaum und Mineralwolle.

In einer weiterhin bevorzugten Ausführungsform wird Polystyrol-Hartschaum verwendet und hierbei insbesondere EPS. EPS geht wegen seiner offenporigen Struktur eine besonders gute Verbindung mit dem Leichtbeton ein.

Bei Verwendung von Polystyrol weist das erfindungsgemäße Wandelement die Feuerschutzklasse M1 auf, bei Verwendung von Mineralwolle ist es sogar der Feuerschutzklasse A1 zuzuordnen.

In einer Ausführungsform der Erfindung weist die Wärmedämmstoff-Schicht eine Dicke von 15 bis 75 mm, bevorzugt von 30 bis 60 mm und besonders bevorzugt von 50 mm auf. Wandelemente mit einer entsprechend dicken Wärmedämmstoff-Schicht weisen eine gute Dämmfähigkeit auf.

In einer Ausführungsform steht die Dicke der Wärmedämmstoff-Schicht zur Dicke der Leichtbetonschicht in einem Verhältnis von 1:2 zu 1:5, bevorzugt von 1:3 zu 1:4 und besonders bevorzugt in einem Verhältnis von 1:3,2 zu 1:3,4. Derartige Verhältnisse sind bei guter Isolierung ausreichend stabil.

Erfindungsgemäß weist bei dem isolierenden Wandelement die Wärmedämmstoff-Schicht an der Berührungsfläche zur Leichtbetonschicht eine randseitig umlaufende Nut auf, wobei die Leichtbetonschicht diese Nut nicht überragt. Diese Nut bildet bei der Montage eine Schattenfuge, die dann durch ein entsprechendes Füllmaterial aufgefüllt werden kann und bietet damit im Bereich der kritischen Kontaktflächen zwischen benachbarten Wandelementen eine verstärkte Außenschicht.

In einer Ausführungsform wird das Isolierendes Wandelement dadurch hergestellt, dass die erste Schicht aus Wärmedämmstoff und die weitere Schicht aus Leichtbeton naß-in-naß zusammen betoniert und ausgehärtet werden. Dies stellt ein schnelles und unkompliziertes Herstellungsverfahren dar. Da Wärmedämmstoffe in der Regel porös sind, dringt der flüssige Leichtbeton partiell in die Wärmedämmstoffschicht ein und führt nach Aushärten zu einer besonders guten Verbindung der beiden Schichten.

In einer alternativen Ausführungsform werden die Wärmdämmstoffschicht und die Leichtbetonschicht separat hergestellt und dann miteinander verbunden, z.B. durch eine Verklebung.

In einer weiteren Ausführungsform der Erfindung weist das isolierende Wandelement mindestens zwei, bevorzugt vier bis sechs senkrecht zur Oberfläche verlaufende durchgängige Bohrungen auf, die bevorzugt in der Leichtbetonschicht zur Oberfläche hin konisch aufgeweitet sind. In diese vorab erstellten Bohrungen können Befestigungsmittel wie Schrauben, Dübel oder Stangen eingeführt werden, und damit das erfindungsgemäße Wandelement auf der (Fassaden)oberfläche befestigt werden. Durch die konische Aufweitung der Bohrung kann hier das Befestigungsmittel durch eine kopfseitige Erweiterung arretiert werden und dabei auch in das Wandelement versenkt sein.

Alternativ kann das isolierende Wandelement zur Befestigung auf der Oberfläche auch andere geeignete Befestigungsmittel aufweisen, wie Nuten oder Stäbe. Diese sind zweckmäßigerweise auf der Rückseite des Wandelements (also auf der der Oberfläche zugewandten Seite im Gegensatz zur Sichtseite) angebracht. Alternativ kann die isolierende Platte mit extern bereitgestellten Befestigungsmitteln wie Stäbe, Schrauben, Gewindestifte oder auch durch Verklebung an der Oberfläche befestigt werden.

In einer bevorzugten Ausführungsform der Erfindung weist die Leichtbetonschicht auf ihrer Vorderseite (also auf der der Wärmedämmstoffschicht abgewandten Seite) randseitig eine Abschrägung auf. Durch diese Abschrägung ergibt sich bei der Montage der Wärmedämmstoffplatten ein trapezförmiger oder dreieckiger Zwischenraum, der nach Auffüllen mit einem Füllstoff zu einer besonders guten Verbindung der Wandelemente führt.

Zweckmäßigerweise ist diese Abschrägung an allen vier Rändern der isolierenden Platte ausgebildet und bildet damit eine rundumlaufende Abschrägung. Damit kann das Wandelement allseitig mit anderen Wandelementen füllstoffmäßig verbunden werden.

In einer besonders bevorzugten Ausführungsform ist diese Abschrägung mit einer frontseitigen Stufe und/oder mit einer rückseitigen Stufe ausgestattet ist, wobei diese Abschrägung bevorzugt an allen vier Rändern der isolierenden Platte ausgebildet ist. Durch die rückseitige Stufe läuft die Abschrägung nicht bis zur Wärmedämmschicht, sondern es verbleibt ein Plateau aus Leichtbeton, welches verhindert, dass die Leichtbetonplatte in diesem Bereich abbricht oder anderweitig beschädigt wird.

Durch die frontseitige Abstufung gibt es einen klaren Übergang zur Vorderseite des Wandelements, so dass bei dem Auffüllen mit dem Füllstoff eine klare Grenze resultiert und damit ein sauberes und passgenaues Verfüllen ermöglicht wird.

In einer weiterhin bevorzugten Ausführungsform ist diese Abschrägung mit der randseitigen Nut der Wärmedämmstoff-Schicht kombiniert und geht dabei zweckmäßigerweise in die randseitige Nut der Wärmedämmstoffschicht über. Dadurch wird bei dem Verfüllen sowohl die Nut im Bereich der Dämmstoffschicht als auch die Abschrägung aufgefüllt und es resultiert eine besonders gute Verbindung der benachbarten Wandelemente.

In einer Ausführungsform der Erfindung weist das isolierende Wandelement eine Breite von zwischen 60 und 100 cm und eine Länge von zwischen 100 und 200 cm auf.

In einer weiteren Ausführungsform der Erfindung weist das Wandelement eine Dicke von zwischen 25 und 125 mm, bevorzugt von zwischen 45 und 90 mm besonders bevorzugt von zwischen 50 und 75 mm und insbesondere von 65 mm auf. Es hat sich herausgestellt, dass eine Wandelement mit einer Dicke in diesem Bereich sowohl eine ausreichende Festigkeit aufweist, als auch ausreichend die Kondensatbildung hemmt, aber auch noch gut zu transportieren und zu montieren ist.

In einer weiteren Ausführungsform der Erfindung hat das isolierende Wandelement einen U-Wert von 0.2 bis 2 W/m²K, bevorzugt von 0.3 bis 1 W/m²K und besonders bevorzugt von 0.4 bis 0.6 W/m²K.

In einem zweiten Aspekt betrifft die vorliegende Erfindung die Verwendung des isolierenden Wandelements zur Erstellung einer isolierenden Fassade.

In einem dritten Aspekt betrifft die Erfindung ein Wandsystem, das mehrere isolierende Wandelemente umfasst.

In einem vierten Aspekt betrifft die Erfindung ein Verfahren zur Erstellung einer isolierenden Plattenfassade, das die folgenden Schritte umfasst:
a) Befestigen von mindestens zwei isolierenden Wandelementen auf einer Wandoberfläche, wobei die benachbarten Wandelemente flächenbündig aneinanderstoßen;
b) Auffüllen der randseitigen Abschrägungen der isolierenden Wandelemente mit einer Füllmasse, die bevorzugt ein Leichtbeton-Füllmasse ist, optional unter Verwendung einer Armierung; und
c) Aufbringen eine Fassadenverkleidung oder einer Fassadenversiegelung

Die Befestigung der Wandelemente im Schritt a) erfolgt hier bevorzugt mit Hilfe von Dämmstoffdübel oder Dämmstoffschrauben.

Das erfindungsgemäße Wandelement kann darüber hinaus auf der Rückseite und/oder der Vorderseite mit einer weiteren Beschichtung versehen sein. Hier ist insbesondere die Kaschierung mit Faserwerkstoffen vorteilhaft und insbesondere die Kaschierung mit einem Glasfaservlies. Diese Kaschierung kann auf der Rückseite der Wärmedämmstoffschicht aufgebracht sein, um die Verklebung mit der Oberfläche zu erleichtern.

Das erfindungsgemäße Wandelement kann bevorzugterweise nach der Montage versiegelt oder beschichtet werden. Entsprechend der Anwendung im Fassadenbereich handelt sich dann zweckmäßigerweise um eine wasserfeste oder wasserdichte Beschichtung.

Bei der wasserfesten oder wasserdichten Beschichtung kann der Fachmann alle bekannte zur (Fassaden-)Versiegelung verwendbaren Beschichtungsmaterialien einsetzen. Bevorzugt ist hierbei eine Beschichtung, die ausgewählt ist aus der Gruppe bestehend aus wasserfestem oder wasserdichtem Beton, wasserfesten oder wasserdichtem Zement und einem Gemisch umfassend Polyurethan und Silikat. Hierbei ist insbesondere ein Gemisch aus Polyurethan und Silikat bevorzugt, da es hohe Beständigkeit mit guter Verarbeitbarkeit verbindet.

In einer weiteren Ausführungsform besitzt die wasserfeste oder wasserdichte Beschichtung eine Schichtdicke von zwischen 0,5 und 5 mm, bevorzugt von zwischen 0,75 und 4 mm und besonders bevorzugt von zwischen 1 und 3 mm. Schichtdicken in diesem Bereich bieten eine ausreichende wasserfeste oder wasserdichte Versiegelung, sind einfach herzustellen und auch kostengünstig zu erstellen.

In einer bevorzugten Ausführungsform weist das Wandelement eine Breite von zwischen 30 und 60 cm und eine Länge von zwischen 100 und 200 cm auf. Bevorzugt ist hier ein Wandelement mit den Maßen 40 cm x 125 cm. Dies entspricht den üblichen im Baubereich verwendeten Maßen für Fassadenplatten. Allerdings kann die Platte je nach Anwendungszweck in ihren Dimensionen auch größer oder auch kleiner gestaltet werden.

Die Erfindung stellt insbesondere die folgenden Ausführungsformen bereit:
Ausführungsform 1: Isolierendes Wandelement zum Verkleiden von Oberflächen, insbesondere Fassaden, umfassend eine erste Schicht aus einem Wärmedämmstoff, deren Oberfläche mit einer weiteren Schicht aus Leichtbeton verbunden ist, **dadurch gekennzeichnet, dass** die Leichtbetonschicht eine Dicke zwischen 15 und 40 mm aufweist und der Leichtbeton die folgenden Eigenschaften aufweist:
   a) Eine Zylinderdruckfestigkeit gemäß DIN 1045-1:2001-07 von mindestens 20 MPa,
   b) Eine Rohdichte von zwischen 600 kg/m³ und 2000 kg/m³ und,
   c) Einen Wasserabsorptionskoeffizient ermittelt nach DIN 52617:1987-05 von 8% oder weniger.
Ausführungsform 2: Isolierendes Wandelement gemäß Ausführungsform 1, **dadurch gekennzeichnet, dass** der Leichtbeton eine Wärmeleitfähigkeit nach DIN 4108 von zwischen 0,39 und 1,6 W m⁻¹k⁻¹, bevorzugt von zwischen 0,4 und 1,4 W m⁻¹k⁻¹, und besonders bevorzugt von zwischen 0,4 und 1,0 W m⁻¹k⁻¹ aufweist.
Ausführungsform 3: Isolierendes Wandelement gemäß Ausführungsform 1 oder 2, **dadurch gekennzeichnet, dass** der Leichtbeton ein Elastizitätsmodul *E* von zwischen 10 und 50 GPa, bevorzugt von zwischen 15 und 40 GPa, und besonders bevorzugt von zwischen 20 und 30 GPa aufweist.
Ausführungsform 4: Isolierendes Wandelement gemäß Ausführungsform 1 bis 3, **dadurch gekennzeichnet, dass** der Leichtbeton ein gefügedichter Leichtbeton, ein Haufwerksporiger Leichtbeton, ein Schaumbeton oder ein Porenbeton ist.
Ausführungsform 5: Isolierendes Wandelement gemäß einem der Ausführungsformen 1 bis 4, **dadurch gekennzeichnet, dass** der Leichtbeton Armierungen aufweist, die bevorzugt ausgewählt sind aus der Gruppe enthaltend Glasfaser, Polymerfaser, Metallnetz und Metallgitter.
Ausführungsform 6: Isolierendes Wandelement gemäß einem der Ausführungsformen 1 bis 5, **dadurch gekennzeichnet, dass** der Wärmedämmstoff eine Druckfestigkeit von mindestens 250 kPa, bevorzugt von mindestens 300 kPa, und besonders bevorzugt von mindestens 400 kPa aufweist.
Ausführungsform 7: Isolierendes Wandelement gemäß einem der Ausführungsformen 1 bis 6, **dadurch gekennzeichnet, dass** der Wärmedämmstoff expandiertes Polystyrol-Hartschaum (EPS), extrudierter Polystyrol-Hartschaum (XPS), Polyurethan-Hartschaum oder Mineralwolle ist.
Ausführungsform 8: Isolierendes Wandelement gemäß einem der Ausführungsformen 1 bis 7, **dadurch gekennzeichnet, dass** die Wärmedämmstoff-Schicht als Grundplatte ausgebildet ist und eine Dicke von 15 bis 75 mm, bevorzugt von 30 bis 60 mm und besonders bevorzugt von 50 mm aufweist.
Ausführungsform 9: Isolierendes Wandelement gemäß einem der Ausführungsformen 1 bis 8, **dadurch gekennzeichnet, dass** die Wärmedämmstoff-Schicht an der Berührungsfläche zur Leichtbetonschicht eine randseitig umlaufende Nut aufweist, wobei die Leichtbetonschicht diese Nut nicht überragt.
Ausführungsform 10: Isolierendes Wandelement nach einem der Ausführungsformen 1 bis 9, **dadurch gekennzeichnet, dass** die erste Schicht aus Wärmedämmstoff und die weitere Schicht aus Leichtbeton naß-in-naß zusammen betoniert und ausgehärtet sind.
Ausführungsform 11: Isolierendes Wandelement nach einem der Ausführungsformen 1 bis 10, dadurch gekennzeichnet, dass das Wandelement mindestens zwei, bevorzugt vier bis sechs durchlaufende Bohrungen aufweist, die bevorzugt in der Leichtbetonschicht zur Oberfläche hin konisch aufgeweitet sind.
Ausführungsform 12: Isolierendes Wandelement gemäß einem der Ausführungsformen 1 bis 11, **dadurch gekennzeichnet, dass** die Leichtbetonschicht randseitig eine Abschrägung aufweist, die bevorzugt mit einer frontseitigen Stufe und/oder mit einer rückseitigen Stufe ausgestattet ist, wobei diese Abschrägung bevorzugt an allen vier Rändern der isolierenden Platte ausgebildet ist.
Ausführungsform 13: Isolierendes Wandelement gemäß einem der Ausführungsformen 1 bis 12, **dadurch gekennzeichnet, dass** die Platte eine Breite von zwischen 60 und 100 cm und eine Länge von zwischen 100 und 200 cm aufweist.
Ausführungsform 14: Isolierendes Wandelement gemäß einem der Ausführungsformen 1 bis 13, **dadurch gekennzeichnet, dass** das isolierende Wandelement einen U-Wert von 0.2 bis 2 W/m²K, bevorzugt von 0.3 bis 1 W/m²K und besonders bevorzugt von 0.4 bis 0.6 W/m²K hat.
Ausführungsform 15: Verwendung des isolierenden Wandelements gemäß einem der Ausführungsformen 1 bis 14 zur Erstellung einer isolierenden Fassade.
Ausführungsform 16: Wandsystem umfassend mehrere isolierende Wandelemente gemäß einem der Ausführungsformen 1 bis 14.
Ausführungsform 17: Verfahren zur Erstellung einer isolierenden Plattenfassade umfassend die folgenden Schritte:
   a) Befestigen von mindestens zwei isolierenden Wandelementen gemäß einem der Ausführungsformen 1 bis 14 auf einer Wandoberfläche, wobei die benachbarten Wandelemente flächenbündig aneinanderstoßen, bevorzugt mit Hilfe von Dämmstoffdübel oder Dämmstoffschrauben;
   b) Auffüllen der randseitigen Abschrägungen der isolierenden Wandelemente mit einer Füllmasse, die bevorzugt ein Leichtbeton-Füllmasse ist, optional unter Verwendung einer Armierung; und
   c) Aufbringen eine Fassadenverkleidung oder einer Fassadenversiegelung.

Die Erfindung ist in den Zeichnungen in mehreren Ausführungsbeispielen dargestellt und nachfolgend beschrieben.

### Definitionen

Ein Wandelement gemäß der Erfindung ist ein Bauelement, das auf eine im wesentlichen plane Oberfläche aufgebracht werden kann, sei es eine Wand, ein Boden oder eine Decke.

Es zeigen:
- Fig. 1: in (**A**) schematischer Weise einen Querschnitt durch eine ungedämmte Wandkonstruktion. Bei einer Umgebungstemperatur unterhalb der Haustemperatur ist gesamte Wärmestrom (Blockpfeil) von innen nach außen gerichtet. Damit liegt die Oberflächentemperatur immer oberhalb der angrenzenden Lufttemperatur und es tritt keine Kondensation auf. In (**B**) ist ein Wärmeverbundsystem mit frontseitigem dünnem Putz gezeigt. Hierbei kommt zu abstrahlungsbedingten Unterkühlungen und somit zu dem damit verbundenen Tauwasserausfall.

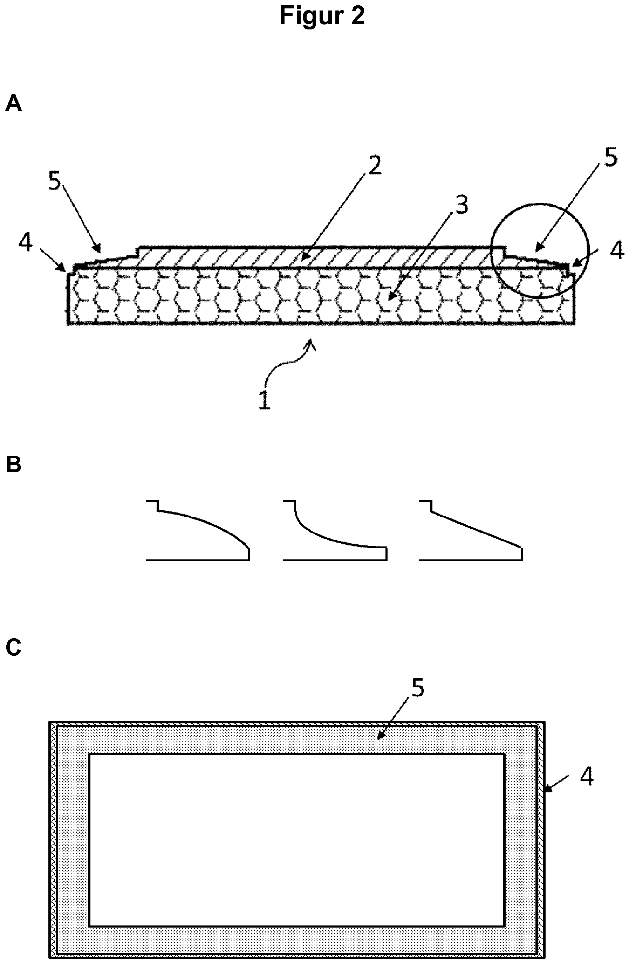

- Fig. 2: in (**A**) einen Querschnitt durch das erfindungsgemäße Wandelement 1 als Verbundplatte mit einer planen Grundplatte aus Wärmedammstoff 3 und einer frontseitigen Platte aus Leichtbeton 2, die an den Rändern eine Abschrägung 5 aufweist. Die Platte aus Wärmedämmstoff weist zudem einen allseitig umlaufende Nut 4 auf. In (**B**) ist die in (**A**) mit dem Kreis hervorgehobene Abschrägung vergrößert dargestellt, um verschiedene Ausgestaltungen darzustellen, die von links nach rechts als konvex, konkav und geradlinig wiedergegeben sind. In (**C**) ist das erfindungsgemäße Wandelement in frontseitiger Aufsicht wiedergegeben, wobei die Abschrägung 5 und die Nut 4 zu erkennen sind.

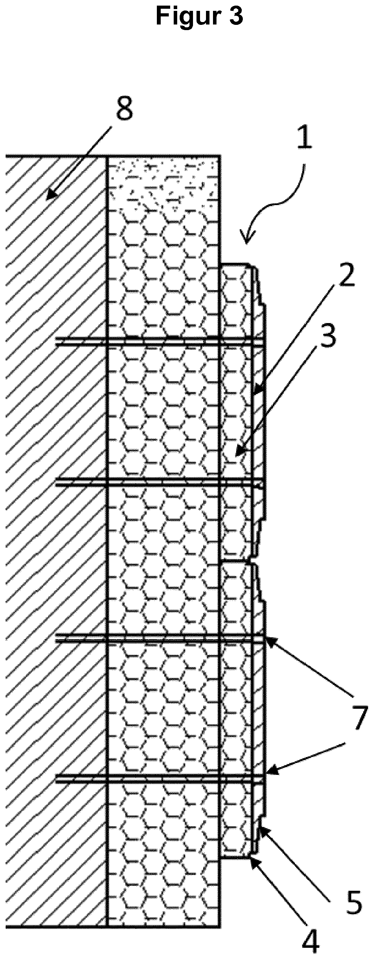

- Fig. 3: einen Ausschnitt aus einem Wandsystem mit zwei benachbarten erfindungsgemäßen Wandelementen 1, bestehend aus Wärmedämmstoffschicht 3 und Leichtbetonschicht 2, wobei die Elemente mit Dübeln 7 in der Wandoberfläche 8 verankert worden sind.

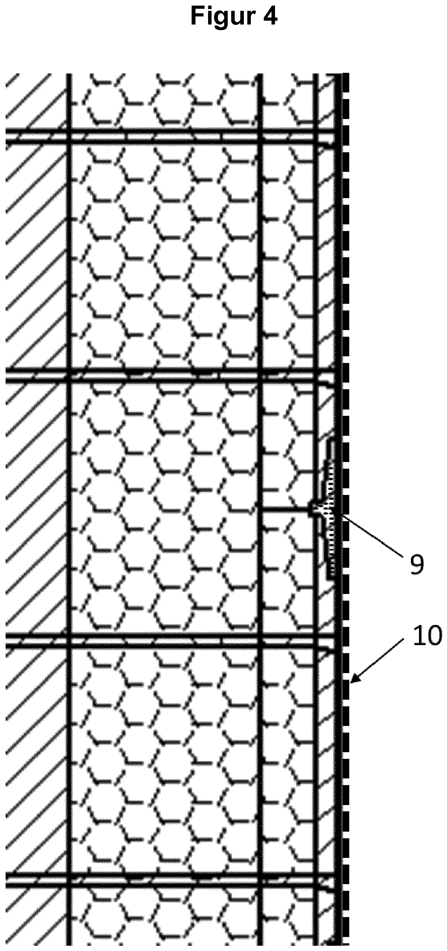

- Fig. 4: einen Ausschnitt aus einem Wandsystem mit zwei benachbarten erfindungsgemäßen Wandelementen 1, wobei der Zwischenraum, der durch die Nuten 4 und die Abschrägungen 5 gebildet wird, mit einer Füllmasse 9 so ausgefüllt worden ist, dass eine frontseitig plane Fläche entstanden ist. Die Wandelemente sind abschließend mit einer Beschichtung 10 (gestrichelte Linie) als Oberflächenversiegelung versehen worden.

### Bezugszeichenliste

- 1: Isolierendes Wandelement
- 2: Schicht aus Leichtbeton
- 3: Schicht aus Wärmedämmstoff
- 4: Randseitig umlaufende Nut
- 5: Randseitige Abschrägung
- 6: konisch aufgeweitetes Loch zur Aufnahme des Befestigungsmittels
- 7: Tellerdübel als Befestigungsmittel
- 8: Wandoberfläche
- 9: Füllstoff zur Verfüllung des Zwischenraums zwischen den Wandelementen
- 10: Abschließende Oberflächenversiegelung

## Patentansprüche

1. Isolierendes Wandelement zum Verkleiden von Oberflächen (1), insbesondere Fassaden, bestehend aus zwei Schichten (2, 3), wobei die erste Schicht aus einem Wärmedämmstoff (3) besteht, deren Oberfläche mit der zweiten Schicht aus Leichtbeton (2) verbunden ist, wobei die Leichtbetonschicht (2) eine Dicke zwischen 15 und 40 mm und eine Rohdichte von zwischen 600 und 2000 kg/m³ aufweist, **dadurch gekennzeichnet, dass** die Wärmedämmstoff-Schicht (3) an der Berührungsfläche zur Leichtbetonschicht eine randseitig umlaufende Nut (4) aufweist, wobei die Leichtbetonschicht diese Nut nicht überragt.

2. Isolierendes Wandelement gemäß Anspruch 1, **dadurch gekennzeichnet, dass** die Leichtbetonschicht einen Wasserabsorptionskoeffizient ermittelt nach DIN 52617:1987-05 von 8% oder weniger aufweist.

3. Isolierendes Wandelement gemäß Anspruch 1 oder 2, **dadurch gekennzeichnet, dass** der Leichtbeton eine Wärmeleitfähigkeit nach DIN 4108 von zwischen 0,39 und 1,6 W m⁻¹k⁻¹, bevorzugt von zwischen 0,4 und 1,4 W m⁻¹k⁻¹, und besonders bevorzugt von zwischen 0,4 und 1,0 W m⁻¹k⁻¹ aufweist.

4. Isolierendes Wandelement gemäß Anspruch 1 bis 3, **dadurch gekennzeichnet, dass** der Leichtbeton ein Elastizitätsmodul *E* von zwischen 10 und 50 GPa, bevorzugt von zwischen 15 und 40 GPa, und besonders bevorzugt von zwischen 20 und 30 GPa aufweist.

5. Isolierendes Wandelement gemäß Anspruch 1 bis 4, **dadurch gekennzeichnet, dass** der Leichtbeton ein gefügedichter Leichtbeton, ein Haufwerksporiger Leichtbeton, ein Schaumbeton oder ein Porenbeton ist.

6. Isolierendes Wandelement gemäß einem der vorangehenden Ansprüche, **dadurch gekennzeichnet, dass** der Leichtbeton Armierungen aufweist, die bevorzugt ausgewählt sind aus der Gruppe enthaltend Glasfaser, Polymerfaser, Metallnetz und Metallgitter.

7. Isolierendes Wandelement gemäß einem der vorangehenden Ansprüche, **dadurch gekennzeichnet, dass** der Wärmedämmstoff eine Druckfestigkeit von mindestens 250 kPa, bevorzugt von mindestens 300 kPa, und besonders bevorzugt von mindestens 400 kPa aufweist.

8. Isolierendes Wandelement gemäß einem der vorangehenden Ansprüche, **dadurch gekennzeichnet, dass** der Wärmedämmstoff expandiertes Polystyrol-Hartschaum (EPS), extrudierter Polystyrol-Hartschaum (XPS), Polyurethan-Hartschaum oder Mineralwolle ist.

9. Isolierendes Wandelement gemäß einem der vorangehenden Ansprüche, **dadurch gekennzeichnet, dass** die Wärmedämmstoff-Schicht als Grundplatte ausgebildet ist und eine Dicke von 15 bis 75 mm, bevorzugt von 30 bis 60 mm und besonders bevorzugt von 50 mm aufweist.

10. Isolierendes Wandelement nach einem der vorangehenden Ansprüche, **dadurch gekennzeichnet, dass** die erste Schicht aus Wärmedämmstoff und die zweite Schicht aus Leichtbeton naß-in-naß zusammen betoniert und ausgehärtet sind.

11. Isolierendes Wandelement nach einem der vorangehenden Ansprüche, **dadurch gekennzeichnet, dass** das Wandelement mindestens zwei, bevorzugt vier bis sechs durchlaufende Bohrungen aufweist, die bevorzugt in der Leichtbetonschicht zur Oberfläche hin konisch aufgeweitet sind.

12. Isolierendes Wandelement gemäß einem der vorangehenden Ansprüche, **dadurch gekennzeichnet, dass** die Leichtbetonschicht randseitig eine Abschrägung aufweist, die bevorzugt mit einer frontseitigen Stufe und/oder mit einer rückseitigen Stufe ausgestattet ist, wobei diese Abschrägung bevorzugt an allen vier Rändern der isolierenden Platte ausgebildet ist.

13. Isolierendes Wandelement gemäß einem der vorangehenden Ansprüche, **dadurch gekennzeichnet, dass** die Platte eine Breite von zwischen 60 und 100 cm und eine Länge von zwischen 100 und 200 cm aufweist.

14. Verwendung des isolierenden Wandelements gemäß einem der vorangehenden Ansprüche zur Erstellung einer isolierenden Fassade.

15. Wandsystem umfassend mehrere isolierende Wandelemente gemäß einem der Ansprüche 1 bis 13.

16. Verfahren zur Erstellung einer isolierenden Plattenfassade umfassend die folgenden Schritte:
a) Befestigen von mindestens zwei isolierenden Wandelementen gemäß Anspruch 12 auf einer Wandoberfläche, wobei die benachbarten Wandelemente flächenbündig aneinanderstoßen, bevorzugt mit Hilfe von Dämmstoffdübel oder Dämmstoffschrauben;
b) Auffüllen der randseitigen Abschrägungen der isolierenden Wandelemente mit einer Füllmasse, die bevorzugt ein Leichtbeton-Füllmasse ist, optional unter Verwendung einer Armierung; und
c) Aufbringen einer Fassadenverkleidung oder einer Fassadenversiegelung.

## Claims

1. An insulating wall element for cladding surfaces (1), especially facades, consisting of two layers (2, 3), wherein the first layer consists of a heat insulating material (3) whose surface is bonded to the second layer made of lightweight concrete (2), wherein said lightweight concrete layer (2) has a thickness of from 15 to 40 mm and a bulk density of from 600 to 2000 kg/m³, **characterized in that** said heat insulating material layer (3) has a circumferential groove (4) on the contact surface towards the lightweight concrete layer, wherein the lightweight concrete layer does not extend beyond said groove.

2. The insulating wall element according to claim 1, **characterized in that** said lightweight concrete layer has a water absorption coefficient of 8% or less as determined according to DIN 52617:1987-05.

3. The insulating wall element according to claim 1 or 2, **characterized in that** said lightweight concrete has a thermal conductivity according to DIN 4108 of from 0.39 to 1.6 Wm⁻¹K⁻¹, preferably from 0.4 to 1.4 Wm⁻¹K⁻¹, and more preferably from 0.4 to 1.0 Wm⁻¹K⁻¹.

4. The insulating wall element according to claim 1 to 3, **characterized in that** said lightweight concrete has a modulus of elasticity, E, of from 10 to 50 GPa, preferably from 15 to 40 GPa, and more preferably from 20 to 30 GPa.

5. The insulating wall element according to claim 1 to 4, **characterized in that** said lightweight concrete is a structurally dense lightweight concrete, a lightweight aggregate concrete, a foamed concrete, or an aerated concrete.

6. The insulating wall element according to any of the preceding claims, **characterized in that** said lightweight concrete contains reinforcing agents, preferably selected from the group consisting of glass fibers, polymer fibers, metal meshes, and metal grids.

7. The insulating wall element according to any of the preceding claims, **characterized in that** said heat insulating material has a compressive strength of at least 250 kPa, preferably at least 300 kPa, and more preferably at least 400 kPa.

8. The insulating wall element according to any of the preceding claims, **characterized in that** said heat insulating material is expanded polystyrene rigid foam (EPS), extruded polystyrene rigid foam (XPS), polyurethane rigid foam, or mineral wool.

9. The insulating wall element according to any of the preceding claims, **characterized in that** said heat insulating material layer is formed as a base plate and has a thickness of 15 to 75 mm, preferably from 30 to 60 mm, and more preferably of 50 mm.

10. The insulating wall element according to any of the preceding claims, **characterized in that** the first layer of heat insulating material and the second layer of lightweight concrete have been concreted and cured together wet-on-wet.

11. The insulating wall element according to any of the preceding claims, **characterized in that** said wall element has at least two, preferably four to six, through bores, which are preferably conically expanded towards the surface in the lightweight concrete layer.

12. The insulating wall element according to any of the preceding claims, **characterized in that** said lightweight concrete layer is beveled on the edge, which is preferably provided with a front-side step and/or a back-side step, wherein such beveling is preferably formed on all four edges of the insulating plate.

13. The insulating wall element according to any of the preceding claims, **characterized in that** the plate has a width of from 60 to 100 cm, and a length of from 100 to 200 cm.

14. Use of the insulating wall element according to any of the preceding claims for creating an insulating facade.

15. A wall system comprising several insulating wall elements according to any of claims 1 to 13.

16. A process for creating an insulating plate facade, comprising the following steps:
a) attaching at least two insulating wall elements according to claim 12 at a wall surface, wherein adjacent wall elements are abutting and flush-mounted, preferably by means of insulating material dowels or insulating material screws;
b) filling the beveled edges of the insulating wall elements with a filling composition, which is preferably a lightweight concrete filling composition, optionally using a reinforcement; and
c) applying a facade cladding or a facade sealing.

## Revendications

1. Elément mural isolant pour revêtir des surfaces (1), notamment des façades, consistant en deux couches (2, 3), dans lequel la première couche consiste en un isolant thermique (3) dont la surface est liée à la deuxième couche de béton léger (2), dans lequel ladite couche de béton léger (2) présente une épaisseur entre 15 et 40 mm et une masse volumique entre 600 et 2000 kg/m³, **caractérisé en ce que** ladite couche d'isolant thermique (3) présente une rainure périphérique (4) à la surface de contact avec la couche de béton léger, la couche de béton léger ne s'étendant pas au-delà de ladite rainure.

2. Elément mural isolant selon la revendication 1, **caractérisé en ce que** ladite couche de béton léger présente un coefficient d'absorption d'eau de 8 % ou moins, déterminé selon DIN 52617:1987-05.

3. Elément mural isolant selon la revendication 1 ou 2, **caractérisé en ce que** ledit béton léger présente une conductivité thermique selon DIN 4108 comprise entre 0,39 et 1,6 Wm⁻¹K⁻¹, de préférence entre 0,4 et 1,4 Wm⁻¹K⁻¹, de préférence encore entre 0,4 et 1,0 Wm⁻¹K⁻¹.

4. Elément mural isolant selon la revendication 1 à 3, **caractérisé en ce que** ledit béton léger présente un module élastique compris entre 10 et 50 GPa, de préférence entre 15 et 40 GPa, de préférence encore entre 20 et 30 GPa.

5. Elément mural isolant selon la revendication 1 à 4, **caractérisé en ce que** ledit béton léger est un béton de granulats légers, un béton caverneux, un béton mousse, ou un béton cellulaire.

6. Elément mural isolant selon l'une quelconque des revendications précédentes, **caractérisé en ce que** ledit béton léger présente des renforts, de préférence choisis dans le groupe consistant en fibres de verre, fibres de polymère, un filet métallique, et un treillis métallique.

7. Elément mural isolant selon l'une quelconque des revendications précédentes, **caractérisé en ce que** ledit isolant thermique présente une résistance à la compression d'au moins 250 kPa, de préférence au moins 300 kPa, de préférence encore au moins 400 kPa.

8. Elément mural isolant selon l'une quelconque des revendications précédentes, **caractérisé en ce que** ledit isolant thermique est une mousse rigide de polystyrène expansé (EPS), une mousse rigide de polystyrène extrudé (XPS), une mousse rigide de polyuréthane, ou une laine minérale.

9. Elément mural isolant selon l'une quelconque des revendications précédentes, **caractérisé en ce que** ladite couche d'isolant thermique est formée comme plaque de base et présente une épaisseur de 15 à 75 mm, de préférence de 30 à 60 mm, de préférence encore 50 mm.

10. Elément mural isolant selon l'une quelconque des revendications précédentes, **caractérisé en ce que** la première couche d'isolant thermique et la deuxième couche de béton léger sont soumises à un bétonnage et durcies ensemble mouillée sur mouillée.

11. Elément mural isolant selon l'une quelconque des revendications précédentes, **caractérisé en ce que** ledit élément mural présente au moins deux, de préférence quatre à six, alésages débouchants, qui sont de préférence élargis coniquement vers la surface dans la couche de béton léger.

12. Elément mural isolant selon l'une quelconque des revendications précédentes, **caractérisé en ce que** ladite couche de béton léger présente un bord biseauté sur la périphérie, de préférence procuré d'une étape de face avant et/ou d'une étape de face arrière, ledit bord biseauté étant formé de préférence sur les quatre bords de la plaque isolante.

13. Elément mural isolant selon l'une quelconque des revendications précédentes, **caractérisé en ce que** la plaque présente une largeur comprise entre 60 et 100 cm et une longueur comprise entre 100 et 200 cm.

14. Utilisation de l'élément mural isolant selon l'une quelconque des revendications précédentes pour créer une façade isolante.

15. Système murale comprenant plusieurs éléments muraux isolants selon l'une quelconque des revendications 1 à 13.

16. Procédé pour créer une façade isolante de plaques, comprenant les étapes consistant à :
a) attacher au moins deux éléments muraux isolants selon la revendication 12 sur une surface murale, dans lequel les éléments muraux adjacents sont en butée et affleurés, de préférence au moyen de chevilles en isolant thermique ou de vis en isolant thermique,
b) remplir les bords biseautés sur la périphérie des éléments muraux isolants avec une matière de remplissage, de préférence étant une matière de remplissage en béton léger, facultativement en utilisant un renfort, et
c) appliquer un revêtement de façades ou un scellement de façades.
